# EUROPÄISCHE PATENTANMELDUNG

(11) **EP 1 717 676 A1**
(43) Veröffentlichungstag der Anmeldung: **02.11.2006**
(21) Anmeldenummer: 06008908.3
(22) Anmeldetag: 28.04.2006
(51) Int. Cl.: G06F 3/033, H04M 1/247

(54) **Bewegungsgesteuertes Mobiltelefon**

(30) Priorität: 30.04.2005 DE 102005020289
(71) Anmelder: Kabus, Cornelius, 40227 Düsseldorf (DE)
(72) Erfinder: Kabus, Cornelius, 40227 Düsseldorf (DE)
(74) Vertreter: Stenger, Watzke & Ring

(57) **Zusammenfassung**

Die Erfindung betrifft ein Telefon, insbesondere Mobiltelefon, mit einer displaygestützten Menüsteuerung und einer Einrichtung zur Bedienung der Menüsteuerung. Um ein Telefon bereitzustellen, das über eine einfache handhabbare Menüsteuerung verfügt, wird mit der Erfindung vorgeschlagen, daß die Einrichtung zur Bedienung der Menüsteuerung einen Sensor, der die relative Lage des Telefons im Raum erfaßt, und eine Auswerteeinheit, die die vom Sensor in Entsprechung der erfaßten Meßwerte gelieferten Signale auswertet, aufweist, wobei eine Menüsteuerung in Abhängigkeit der von der Auswerteeinheit ausgewerteten Signale erfolgt.

## Beschreibung

Die Erfindung betrifft ein Telefon, insbesondere ein Mobiltelefon, mit einer displaygestützten Menüsteuerung und einer Einrichtung zur Bedienung der Menüsteuerung. Des weiteren betrifft die Erfindung ein Verfahren zur Steuerung des Menüs eines Telefons, insbesondere eines Mobiltelefons.

Telefone, insbesondere Mobiltelefone, die über eine displaygestützte Menüsteuerung und einer Einrichtung zur Bedienung der Menüsteuerung verfügen, sind aus dem Stand der Technik in vielerlei Ausgestaltungsformen bekannt, weshalb es eines gesonderten druckschriftlichen Nachweises an dieser Stelle nicht bedarf.

Bei Telefonen mit displaygestützter Menüsteuerung werden im Display des Telefons die zur Verfügung stehenden Menüfunktionen mittels grafischer Symbole dargestellt. Diese grafischen Symbole können vom Benutzer des Telefons wahlweise angewählt werden. Zu diesem Zweck dient in aller Regel ein gleichfalls grafisch im Display des Telefons abgebildetes Auswahlmittel, beispielsweise in Form eines Mauszeigers. Dieser Mauszeiger kann vom Bediener des Telefons wahlweise positioniert werden, indem die zur Auswahlmittelsteuerung vorgesehenen Tasten des Telefons vom Benutzer betätigt werden. So kann der Benutzer des Telefons über die Telefontasten das Auswahlmittel mit Bezug auf die Displayebene des Telefons nach links, rechts, oben und unten bewegen und so gewünschte Menüfunktionen, die durch grafische Symbole dargestellt sind, an- bzw. auswählen. Befindet sich der Mauszeiger in einer vom Benutzer gewünschten Stellung, so kann die in dieser Stellung des Auswahlmittels ausgewählte Menüfunktion durch Betätigen eines Betätigungselements bestätigt werden. Die so ausgewählte und bestätigte Menüfunktion wird alsdann ausgeführt.

Das verwendete Auswahlmittel kann in Abhängigkeit der Menüsteuerung des Telefons unterschiedlichste grafische Ausgestaltungen aufweisen. Darüber hinaus kann das Auswahlmittel entweder über den gesamten Displaybereich des Telefons frei positioniert oder auf Basis eines hinterlegten Bewegungsrasters nur dem Bewegungsraster entsprechend in vorgebbaren Schrittweiten bewegt werden. So sind aus dem Stand der Technik beispielsweise Mobiltelefone mit einer displaygestützten Menüsteuerung bekannt geworden, bei denen im Display einzelne Menüfunktionen durch grafische Symbole dargestellt sind und das Auswahlmittel mittels der Telefontasten von einem Menüicon zum nächsten Menüicon springen kann. Sobald das gewünschte Menüicon, das heißt die grafische Darstellung der gewünschten Menüfunktion über das Auswahlmittel ausgewählt ist, kann diese Auswahl durch Betätigen einer hierfür vorgesehenen Telefontaste bestätigt werden, was dann zum Ausführen der ausgewählten Menüfunktion führt.

Obgleich sich die vorbeschriebene Menüsteuerung dem Grunde nach bewährt hat, besteht Verbesserungsbedarf, insbesondere mit Blick auf die Handhabung, denn es hat sich in der Praxis herausgestellt, daß die displaygestützte Menüsteuerung über die Telefontasten insbesondere zeitaufwendig ist. Zudem verschleißen die Telefontasten nach einiger Zeit der Benutzung, so daß bei einem verschleißbedingten Ausfall der einen oder anderen Telefontaste eine Menüsteuerung nicht mehr vorgenommen werden kann. Da insbesondere bei Mobiltelefonen die Telefontasten vergleichsweise klein ausgeführt sind, ist eine Menüsteuerung über die Telefontasten zudem zumeist schwierig zu bewerkstelligen, da der Telefonnutzer darauf zu achten hat, daß er aus Versehen nicht zwei oder mehr Telefontasten gleichzeitig bedient.

Ausgehend vom vorbeschriebenen Stand der Technik ist es daher die **Aufgabe** der Erfindung, ein Telefon, insbesondere ein Mobiltelefon mit einer displaygestützten Menüsteuerung bereitzustellen, welches eine vereinfachte Handhabung der Menüsteuerung ermöglicht.

Zur **Lösung** dieser Aufgabe wird mit der Erfindung vorgeschlagen, daß die Einrichtung zur Bedienung der Menüsteuerung einen Sensor, der die relative Lage des Telefons im Raum erfaßt, und eine Auswerteeinheit, die die vom Sensor in Entsprechung der erfaßten Meßwerte gelieferten Signale auswertet, aufweist, wobei eine Menüsteuerung in Abhängigkeit der von der Auswerteeinheit ausgewerteten Signale erfolgt.

Im Unterschied zu den aus dem Stand der Technik bekannten Telefonen erfolgt bei dem erfindungsgemäßen Telefon eine Menüsteuerung nicht über die Telefontasten, sondern vielmehr über die Detektion der relativen Lage des Telefons im Raum. Zu diesem Zweck verfügt das erfindungsgemäße Telefon über wenigstens einen Sensor, der die relative Lage des Telefons im Raum erfaßt. Darüber hinaus verfügt das erfindungsgemäße Telefon über eine Auswerteeinheit, die die vom Sensor in Entsprechung der erfaßten Meßwerte gelieferten Signale auswertet. Mittels der von der Auswerteeinheit ausgewerteten Signale erfolgt alsdann die Menüsteuerung.

Auf dem Display des Telefons wird vorzugsweise eine grafische Benutzeroberfläche abgebildet, die ein im Display grafisch dargestelltes Auswahlmittel, beispielsweise in Form eines Mauszeigers, umfaßt. Die Position des Auswahlmittels ist in Abhängigkeit der von der Auswerteeinheit ausgewerteten Signale steuerbar. Das Auswahlmittel läßt sich mithin in einfacher Weise dadurch positionieren, daß das Telefon im Raum bewegt wird, wobei eine Steuerung des Auswahlmittels in Abhängigkeit der Bewegung des Telefons im Raum erfolgt. Wird beispielsweise das Telefon in Bezug auf seine Displayebene nach links bewegt, so wandert das im Telefondisplay dargestellte Auswahlmittel gleichfalls nach links. Eine Bewegung des Auswahlmittels in Richtung der übrigen Koordinaten, das heißt mit Bezug auf die Displayebene des Telefons nach rechts, oben oder unten erfolgt in entsprechender Weise, das heißt der Bewegung des Telefons in Richtung der jeweils gewünschten Koordinaten. Alternativ zur vorbeschriebenen Ausgestaltungsform kann auch vorgesehen sein, daß ein Bewegen des Auswahlmittels im Telefondisplay mit Bezug auf die Displayebene des Telefons nach links dadurch erzeugt wird, daß das Telefon mit Bezug auf seine Displayebene nach links verschwenkt, das heißt gekippt wird. Ein Verkippen des Telefons in Richtung einer der anderen Raumkoordinaten führt in Entsprechung des Vorausgeführten zu einem Bewegen des Auswahlmittels im Telefondisplay in die Richtung der jeweils gewünschten Raumkoordinate.

Anders als aus dem Stand der Technik vorbekannt, erfolgt die Positionierung des Auswahlmittels im Telefondisplay also nicht über die Tasten des Telefons, sondern allein dadurch, daß das Telefon in seiner relativen Lage im Raum bewegt wird, wobei die Bewegung des Telefons in eine Bewegung des Auswahlmittels umgesetzt wird, wodurch es auf einfache Weise möglich ist, das Auswahlmittel im Telefondisplay positionsgenau zu bewegen und auf der Benutzeroberfläche des Telefondisplays angeordnete Menüfunktionen, die beispielsweise durch grafische Menüicon symbolisiert sind, anzuwählen.

Das erfindungsgemäße Telefon erlaubt eine Positionierung des im Telefondisplay dargestellten Auswahlmittels auch in Richtung einer aus zwei Bewegungskoordinaten zusammengesetzten Richtung. So kann das Auswahlmittel beispielsweise diagonal auf der Benutzeroberfläche des Telefondisplays verschoben werden, indem das Telefon in Richtung dieser gewünschten Diagonale bewegt, beispielsweise gekippt wird. Anders als bei einer Menüsteuerung über die Telefontasten kann das Auswahlmittel also direkt in Richtung einer Diagonale bewegt werden, es ist also in vorteilhafter Weise nicht erforderlich, das Auswahlmittel in umständlicher Weise zunächst gradlinig beispielsweise nach links und anschließend gradlinig beispielsweise nach oben zu verschieben, um ausgehend vom Mittelpunkt des Telefondisplays ein mit Bezug auf die Ebene des Telefondisplays oben links liegendes Menüicon zu erreichen. Dieses kann erfindungsgemäß vielmehr unmittelbar, das heißt direkt angesteuert werden, indem das Telefon entsprechend im Raum bewegt wird.

Die erfindungsgemäße Einrichtung zur Bedienung der Menüsteuerung verfügt des weiteren über ein Betätigungselement zur Bestätigung einer über die Menüsteuerung ausgewählten Menüfunktion, wobei vorzugsweise vorgesehen ist, daß dieses Betätigungselement ein Druckschalter ist, beispielsweise eine am Telefon ohnehin vorhandene Taste. Diese Taste dient dazu, die beispielsweise mittels des Auswahlmittels ausgewählten Menüfunktion zu bestätigen, das heißt auszuführen. Über das Auswahlmittel wird also eine von mehreren möglichen Menüfunktionen angewählt, die dann, wenn sie ausgewählt ist, mittels des Betätigungselementes bestätigt wird. Die so bestätigte Menüfunktion wird vom Telefon alsdann ausgeführt.

Der besondere Vorteil des erfindungsgemäßen Telefons liegt darin, daß die Menüsteuerung sehr viel einfacher handhabbar ist, denn diese erfolgt über die Bewegung des Telefons im Raum. Eine solche Menüsteuerung ist zum einen sehr viel schneller ausführbar als eine über die Telefontasten des Telefons zu betätigende Menüsteuerung und birgt zum anderen den Vorteil einer verschleißfreien Menüsteuerung in sich. Die Telefontasten des Telefons werden also weniger stark belastet als bei aus dem Stand der Technik bekannten Menüsteuerungen, was die Lebensdauer des Telefons deutlich erhöht.

Die erfindungsgemäße Menüsteuerung kann zudem dazu genutzt werden, das im Display des Telefons Gezeigte "wandern" zu lassen. So können beispielsweise im Telefondisplay dargestellte Fotos in Originalgröße dargestellt werden, wobei der vom Telefondisplay gezeigte Ausschnitt des dargestellten Fotos in Entsprechung der Bewegung des Telefons weiterwandert, beispielsweise mit Bezug auf die Displayebene nach links oder rechts. Durch die Bewegung des Telefons bewegt sich also der vom Telefondisplay gezeigte Bildausschnitt von Bildausschnitt zu Bildausschnitt weiter. Diese Funktion kann in vorteilhafter Weise auch für Handyspiele genutzt werden, deren Grafik auf handelsüblich großen Telefondisplays nicht darstellbar ist, denn es ermöglicht das erfindungsgemäße Telefon, eine solche Grafik ausschnittsweise darzustellen, wobei der Telefonbenutzer sich durch einfache Bewegung des Handys im Raum gewünschte Bildausschnitte anzeigen lassen kann.

Der zur Erfassung der relativen Lage des Telefons im Raum benutzte Sensor kann gemäß einem Merkmal der Erfindung ein optischer Sensor sein. Besonders vorteilhaft ist in diesem Zusammenhang die Verwendung einer Kamera als Sensor. Handelsübliche Telefone, insbesondere Mobiltelefone verfügen zumeist über eine solche Kamera, so daß diese bereits schon vorhandene Kamera als optischer Sensor im Sinne der Erfindung genutzt werden kann. Die erfindungsgemäße Menüsteuerung kann mithin unter Verwendung der bei einem handelsüblichen Telefon, insbesondere Mobiltelefon ohnehin schon vorhandenen Hardwarekomponenten realisiert werden. Dies ermöglicht in vorteilhafter Weise auch eine Nachrüstung bereits bestehender Telefone mit der von der Erfindung vorgeschlagenen Menüsteuerung.

Als Sensor zur Erfassung der relativen Lage des Telefons im Raum eignen sich auch andere Sensoren, so zum Beispiel Bewegungssensoren, insbesondere Beschleunigungssensoren. So kann beispielsweise mit einem Beschleunigungssensor gemessen werden, mittels welcher Beschleunigung ein Telefon in Richtung einer Raumkoordinate bewegt bzw. verkippt wird. Je höher die Beschleunigung ist, desto schneller bewegt sich der im Telefondisplay gezeigte Bildausschnitt zum nächsten Bildausschnitt oder desto schneller bewegt sich das im Telefondisplay dargestellte Auswahlmittel.

Die Verwendung eines Beschleunigungssensors bringt zudem in vorteilhafter Weise weitere Anwendungsmöglichkeiten mit sich. So kann der Beschleunigungssensor beispielsweise als Schrittzähler beim Joggen benutzt werden. Auch kann ein so ausgerüstetes Telefon als Alarmtelefon beispielsweise für ältere Menschen verwendet werden. So kann beispielsweise vorgesehen sein, daß vom Telefon automatisch eine voreingestellte Nummer, beispielsweise der Polizei, der Feuerwehr oder des Notarztes angewählt wird, wenn vom Bewegungssensor des Telefons über einen gewissen Zeitraum keine Bewegung der das Telefon bei sich tragenden Person registriert wird.

Als Sensor eignet sich auch ein akustischer Sensor, wobei in vorteilhafter Weise das bei einem Telefon ohnehin schon vorhandene Mikrophon zur Spracheingabe genutzt wird. Im Falle eines akustischen Sensors kann die Menüsteuerung durch Spracheingabe erfolgen, beispielsweise dadurch, daß sich das im Telefondisplay des Telefons dargestellte Auswahlmittel in Entsprechung der vom Telefonbenutzer akustisch gegebenen Steuerbefehle bewegt.

In einer weiteren Variante kann vorgesehen sein, daß der Sensor ein Magnetfeldsensor ist, der die Nord-Süd-Richtung des Erdmagnetfeldes einsetzt, um die Bewegung des Telefons im Raum relativ zum Erdmagnetfeld auszuwerten.

Aus dem Stand der Technik bekannte Telefone, insbesondere Mobiltelefone lassen sich in aller Regel mittels einer sogenannten Pin-Nummer sperren. Diese Pin-Nummer sollte nur dem Handybenutzer bekannt sein. Bevor das Telefon bestimmungsgemäß verwendet werden kann, ist die Pin-Nummer vom Benutzer einzugeben. Bei herkömmlichen Telefonen erfolgt die Pin-Nummerneingabe über die Telefontasten. Die erfindungsgemäße Ausgestaltung ermöglicht eine Pin-Nummerneingabe auch dadurch, daß das Telefon einer bestimmten Schüttel- und/oder Bewegungssequenz unterzogen wird, die insofern als Ersatz für die Pin-Code-Eingabe dient. Eine solche Pin-Code-Eingabe erweist sich als sehr viel sicherer als die aus dem Stand der Technik bekannte Pin-Code-Eingabe über die Tasten des Telefons.

Gemäß einem weiteren Merkmal der Erfindung ist vorgesehen, daß die Auswerteeinheit eine Vergleichsschaltung aufweist, die die vom Sensor gelieferten Signale miteinander vergleicht und bei Detektion eines einen vorgebbaren Sollwert übersteigenden Vergleichswerts die Menüsteuerung und/oder die Positionierung des Auswahlmittels in Abhängigkeit des von der Vergleichsschaltung gelieferten Vergleichswertes erfolgt. Mit dieser bevorzugten Ausgestaltungsform der Erfindung wird sichergestellt, daß nur vom Benutzer des Telefons gewollte Relativbewegungen des Telefons im Raum zu einer Menüsteuerung führen. Die Menüsteuerung setzt erst dann ein, wenn eine vorgebbare Mindestbewegung des Telefons im Raum vorliegt. Erschütterungen oder durch zittrige Hände des Benutzers bewirkte Bewegungen des Telefons werden vom Sensor zwar registriert, führen aber nicht zu einer Menüsteuerung, wenn die von der Vergleichsschaltung ermittelten Vergleichswerte unter einem vorgebbaren Sollwert liegen. Auf diese Weise wird sichergestellt, daß nur bewußt, das heißt gewollt durchgeführte Bewegungen des Telefons zu einer Menüsteuerung führen. Nicht gewollte Bewegungen des Telefons werden insofern erkannt. Eine präzise Menüsteuerung wird so in vorteilhafter Weise sichergestellt.

Mit der Erfindung wird des weiteren vorgeschlagen ein Verfahren zur Steuerung des Menüs eines Telefons, insbesondere eines Mobiltelefons, bei dem mittels eines Sensors die relative Lage des Telefons im Raum erfaßt wird, bei dem der Sensor den erfaßten Meßwerten entsprechende Signale an eine Auswerteeinheit abgibt, bei dem die Auswerteeinheit mit einer Vergleichsschaltung die vom Sensor gelieferten Signale miteinander vergleicht, wobei eine Menüsteuerung in Abhängigkeit der von der Vergleichsschaltung ermittelten Vergleichswerte durchgeführt wird.

Das erfindungsgemäße Verfahren erlaubt im Unterschied zu den aus dem Stand der Technik bekannten Menüsteuerungen eine vereinfachte Handhabung. Wie bereits vorstehend beschrieben, erfolgt die Steuerung des Menüs eines Telefons dadurch, daß das Telefon im Raum bewegt wird, wobei die relative Lageänderung des Telefons im Raum erfaßt und zur Menüsteuerung verwendet wird. Durch diese Verfahrensdurchführung ergeben sich die schon vorstehend beschriebenen Vorteile.

Gemäß einem weiteren Merkmal des erfindungsgemäßen Verfahrens ist vorgesehen, daß nur solche von der Vergleichsschaltung ermittelten Vergleichswerte für eine Menüsteuerung genutzt werden, die einen vorgebbaren Sollwert übersteigen. Hierdurch wird in vorteilhafter Weise sichergestellt, daß nur vom Benutzer gewollte Bewegungen des Telefons zur Menüsteuerung dienen. Ungewollte Telefonbewegungen werden als solche erkannt und für die Menüsteuerung nicht verwendet. Maßstab für die Unterscheidung zwischen ungewollten Telefonbewegungen einerseits und gewollten Telefonbewegungen andererseits ist ein vorgebbarer Bewegungssollwert, der von den von der Vergleichsschaltung gelieferten Vergleichswerten zu überschreiten ist, damit die von dem Sensor des Telefons erfaßte Bewegung als vom Benutzer des Telefons gewollte Bewegung erkannt wird.

Die von der Vergleichsschaltung gelieferten Vergleichswerte dienen erfindungsgemäß dazu, ein im Display des Telefons grafisch dargestelltes Auswahlmittel zu positionieren. Auf diese Weise kann das Auswahlmittel durch entsprechende Bewegung des Telefons vom Benutzer wahlweise im Display des Telefons positioniert und beispielsweise zur Auswahl einer Menüfunktion genutzt werden, indem das Auswahlmittel zielgerichtet auf das die gewünschte Menüfunktion symbolisierende Menüicon auf der Benutzeroberfläche des Displays verschoben wird. Eine Bestätigung der über das Auswahlmittel ausgewählten Menüfunktion erfolgt dann mittels eines Betätigungselements, welches beispielsweise ein Druckschalter, vorzugsweise eine Telefontaste ist.

Weitere Merkmale und Vorteile der Erfindung ergeben sich aus der Beschreibung anhand der nachfolgenden Fign. Dabei zeigen:
- Fig. 1: in schematischer Darstellung ein erfindungsgemäßes Telefon in einer ersten Ausgestaltungsform;
- Fig. 2: in schematischer Darstellung ein erfindungsgemäßes Telefon in einer zweiten Ausgestaltungsform und
- Fig. 3: in einer schematischen Darstellung ein erfindungsgemäßes Telefon in einer dritten Ausgestaltungsform.

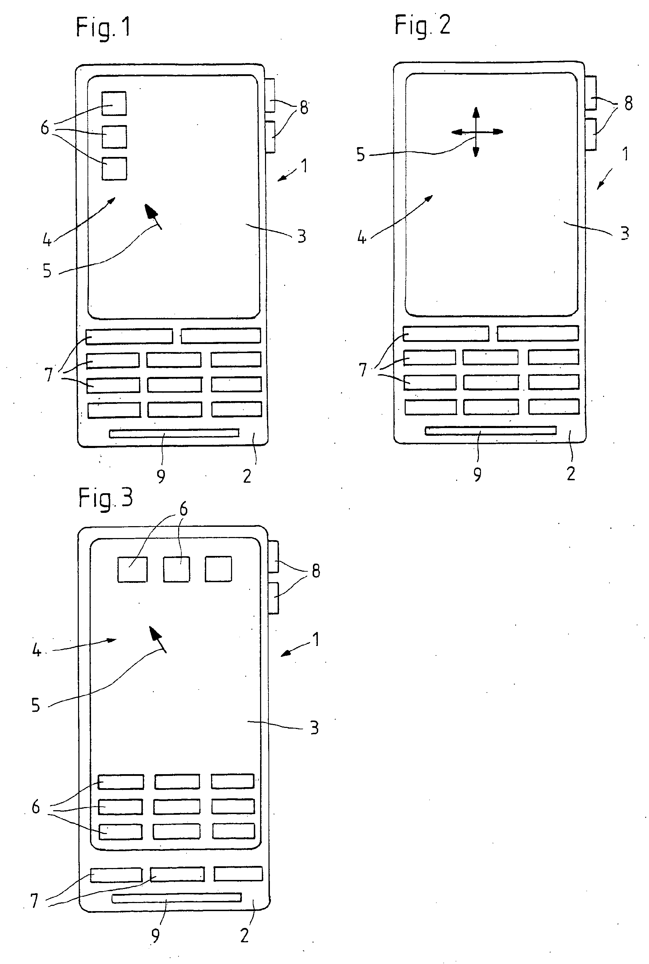

Die Fign. 1, 2 und 3 zeigen das erfindungsgemäße Telefon 1 in drei unterschiedlichen Ausgestaltungsformen. Die Darstellungen sind nicht maßstäblich und sollen nur der näheren Erläuterung der Erfindung dienen, weshalb sie nicht beschränkend wirken.

Das in Fig. 1 beispielhaft dargestellte Telefon 1 ist ein Mobiltelefon. Es verfügt über mehrere Tasten 7 und Schalter 8, die in einem Gehäuse 2 angeordnet sind. Mit Bezug auf die Blattebene nach Fig. 1 befindet sich unterhalb der Tasten 7 zudem ein Mikrophon 9, welches der Spracheingabe dient.

Das Telefon 1 verfügt des weiteren über ein Display 3. Dieses Display 3 stellt für den Benutzer des Telefons 1 eine Benutzeroberfläche bereit, die unter anderem ein Menü 4 zur Steuerung der Funktionen des Telefons 1 bereitstellt. Die über das Menü 4 anwählbaren Funktionen sind grafisch durch Funktionsicon 6 symbolisiert. Diese Funktionsicon 6 können mittels eines Auswahlmittels 5 in Form eines Mauszeigers angewählt, das heißt ausgewählt werden.

Zur Bewegung des Auswahlmittels 5 dienen im Unterschied zum Stand der Technik nicht die Tasten 7, sondern eine in Fig. 1 separat nicht dargestellte Einrichtung zur Menüsteuerung, die einen Sensor, der die relative Lage des Telefons 1 im Raum erfaßt, und eine Auswerteeinheit, die die vom Sensor in Entsprechung der erfaßten Meßwerte gelieferten Signale auswertet, aufweist, wobei das Auswahlmittel 5 in Abhängigkeit der von der Auswerteeinheit ausgewerteten Signale positioniert wird. Durch eine einfache Relativbewegung des Telefons 1 im Raum kann so das Auswahlmittel 5 auf dem Display 3 des Telefons 1 bewegt werden. So führt beispielsweise ein Bewegen des Telefons 1 mit Bezug auf die Blattebene nach Fig. 1 nach links zu einem Verschieben des Auswahlmittels 5 gleichfalls nach links. Die im Display 3 des dargestellten Telefons 1 angezeigten Funktionsicon 6 können so über das Auswahlmittel 5 angewählt bzw. ausgewählt werden, indem die relative Lage des Telefons 1 im Raum entsprechend verändert wird.

Ein jedes der Funktionsicon 6 symbolisiert eine Menüfunktion. Sobald eines dieser Funktionsicon 6 in vorbeschriebener Weise mittels des Auswahlmittels 5 ausgewählt bzw. angewählt ist, kann die durch das Funktionsicon symbolisierte Menüfunktion ausgeführt werden, indem einer der beispielhaft dargestellten Schalter 8 betätigt wird, wodurch die mittels des Auswahlmittels 5 ausgewählte Menüfunktion bestätigt wird.

Fig. 2 zeigt ein Telefon 1 nach Bauart des bereits schon anhand von Fig. 1 beschriebenen Telefons 1. Im Unterschied zur Darstellung nach Fig. 1 zeigt das Display 3 des Telefons 1 nach Fig. 2 ein Auswahlmittel 5, welches als Vierfachpfeil ausgebildet ist. Diese Darstellung des Auswahlmittels 5 symbolisiert, daß der vom Display 3 gezeigte Ausschnitt beispielsweise eines Bildes Bildausschnitt für Bildausschnitt weiter verschoben werden kann. Ein Weiterverschieben der Bildausschnitte erfolgt dabei in der schon bereits vorbeschriebenen Weise, nämlich durch Bewegung des Telefons 1 selbst. Durch eine beispielsweise einfache Kippbewegung des Telefons 1 kann der vom Display 3 gezeigte Bildausschnitt wandern, beispielsweise nach links oder rechts, je nachdem, wie das Telefon 1 in seiner relativen Lage im Raum bewegt wird. Die in den Fign. 1 und 2 gezeigte Menüsteuerung unterscheidet sich also insofern, als daß bei der Menüsteuerung nach Fig. 1 das Auswahlmittel 5 über das Display 3 bewegt wird, wohingegen die Menüsteuerung nach Fig. 2 eine Bewegung, das heißt ein "Wandern" des vom Display 3 gezeigten Bildausschnittes bewirkt. Andere Menüsteuerungen als die anhand von Fig. 1 und 2 beschriebenen sind gleichfalls denkbar und fallen mit unter die erfindungsgemäße Ausgestaltung. Die Form der gewünschten Menüsteuerung kann dabei vom Telefonbenutzer über eine der beispielhaft dargestellten Schalter 8 ausgewählt werden.

Fig. 3 zeigt in schematischer Darstellung ein erfindungsgemäßes Telefon 1, wobei im Unterschied zu den Ausgestaltungsformen nach den Fign. 1 und 2 einige der Telefontasten 7 durch Funktionsicon 6 ersetzt sind, die im Display 3 des Telefons 1 grafisch dargestellt sind. Bei diesen durch die Funktionsicon 6 ersetzten Tasten 7 kann es sich beispielsweise um die herkömmlichen Nummerntasten eines Telefons handeln. Diese Nummerntasten können in der Ausgestaltungsform nach Fig. 3 über das Auswahlmittel 5 angewählt werden, welches in vorbeschriebener Weise durch eine relative Lageänderung des Telefons 1 im Raum bewegt werden kann.

### Bezugszeichenliste

- 1: Telefon
- 2: Gehäuse
- 3: Display
- 4: Menü
- 5: Auswahlmittel
- 6: Funktionsicon
- 7: Tasten
- 8: Schalter
- 9: Mikrophon

## Patentansprüche

1. Telefon, insbesondere Mobiltelefon, mit einer displaygestützten Menüsteuerung und einer Einrichtung zur Bedienung der Menüsteuerung,
**dadurch gekennzeichnet,**
**daß** die Einrichtung zur Bedienung der Menüsteuerung einen Sensor, der die relative Lage des Telefons im Raum erfaßt, und eine Auswerteeinheit, die die vom Sensor in Entsprechung der erfaßten Meßwerte gelieferten Signale auswertet, aufweist, wobei eine Menüsteuerung in Abhängigkeit der von der Auswerteeinheit ausgewerteten Signale erfolgt.

2. Telefon nach Anspruch 1, **dadurch gekennzeichnet, daß** die Einrichtung zur Bedienung der Menüsteuerung des weiteren ein im Telefondisplay darstellbares Auswahlmittel aufweist, dessen Position im Telefondisplay in Abhängigkeit der von der Auswerteeinheit ausgewerteten Signale steuerbar ist.

3. Telefon nach Anspruch 1 oder 2, **dadurch gekennzeichnet, daß** die Einrichtung zur Bedienung der Menüsteuerung des weiteren ein Betätigungselement zur Bestätigung einer über die Menüsteuerung und/oder das Auswahlmittel ausgewählte Menüfunktion aufweist.

4. Telefon nach einem der vorhergehenden Ansprüche, **dadurch gekennzeichnet, daß** der Sensor ein optischer Sensor ist.

5. Telefon nach Anspruch 4, **dadurch gekennzeichnet, daß** der Sensor eine Kamera ist.

6. Telefon nach einem der vorhergehenden Ansprüche 1 bis 3, **dadurch gekennzeichnet, daß** der Sensor ein Bewegungssensor ist.

7. Telefon nach Anspruch 6, **dadurch gekennzeichnet, daß** der Sensor ein Beschleunigungssensor ist.

8. Telefon nach einem der vorhergehenden Ansprüche 1 bis 7, **dadurch gekennzeichnet, daß** die Auswerteeinheit eine Vergleichsschaltung aufweist, die die vom Sensor gelieferten Signale miteinander vergleicht und bei Detektion eines einen vorgebbaren Sollwert übersteigenden Vergleichswerts die Menüsteuerung und/oder die Positionierung des Auswahlmittels in Abhängigkeit des von der Vergleichsschaltung gelieferten Vergleichswerts erfolgt.

9. Telefon nach einem der vorhergehenden Ansprüche 1 bis 8, **dadurch gekennzeichnet, daß** das Auswahlmittel ein Mauszeiger ist.

10. Telefon nach einem der vorhergehenden Ansprüche 1 bis 9, **dadurch gekennzeichnet, daß** das Betätigungselement ein Druckschalter ist.

11. Verfahren zur Steuerung des Menüs eines Telefons, insbesondere eines Mobiltelefons, bei dem mittels eines Sensors die relative Lage des Telefons im Raum erfaßt wird, bei dem der Sensor den erfaßten Meßwerten entsprechende Signale an eine Auswerteeinheit abgibt, bei dem die Auswerteeinheit mit einer Vergleichsschaltung die vom Sensor gelieferten Signale miteinander vergleicht, wobei eine Menüsteuerung in Abhängigkeit der von der Vergleichsschaltung ermittelten Vergleichswerte durchgeführt wird.

12. Verfahren nach Anspruch 11, **dadurch gekennzeichnet, daß** nur solche von der Vergleichsschaltung ermittelten Vergleichswerte für eine Menüsteuerung genutzt werden, die einen vorgebbaren Sollwert übersteigen.

13. Verfahren nach Anspruch 11 oder 12, **dadurch gekennzeichnet, daß** die von der Vergleichsschaltung gelieferten Vergleichswerte dazu dienen, ein im Display des Telefons grafisch dargestelltes Auswahlmittel zu positionieren.

14. Verfahren nach einem der vorhergehenden Ansprüche 11 bis 13, **dadurch gekennzeichnet, daß** eine über das Auswahlmittel ausgewählte Menüfunktion mittels eines Betätigungselements bestätigt wird.
